# EUROPÄISCHE PATENTSCHRIFT

(11) **EP 3 134 354 B1**
(45) Veröffentlichungstag und Bekanntmachung des Hinweises auf die Patenterteilung: **06.06.2018**
(21) Anmeldenummer: 15717843.5
(22) Anmeldetag: 13.04.2015
(51) Int. Cl.: C02F 1/52, C02F 11/12

(54) **VERFAHREN UND VORRICHTUNG ZUR ENTWÄSSERUNG VON SCHLAMM AUF EINEM SIEB**
METHOD AND DEVICE FOR DEWATERING SLUDGE ON A SCREEN
PROCÉDÉ ET DISPOSITIF DE DÉSHYDRATATION DE BOUES SUR UN TAMIS

(30) Priorität: 23.04.2014 AT 2912014
(43) Veröffentlichungstag der Anmeldung: 01.03.2017
(73) Patentinhaber: Andritz AG, 8045 Graz (AT)
(72) Erfinder: HOCHEGGER, Ursula, 8111 Gratwein-Strassengel (AT); SPIELMANN, Christoph, 8151 Hitzendorf (AT)
(74) Vertreter: Schweinzer, Friedrich
(86) Internationale Anmeldenummer: PCT/EP2015/057947
(87) Internationale Veröffentlichungsnummer: WO 2015/162024

(56) Entgegenhaltungen:
- US-A1- 2007 090 060

## Beschreibung

Die Erfindung betrifft ein Verfahren zur Entwässerung von Schlamm auf einem Sieb, das durch Waschdüsen gereinigt wird und anschließend in den Einlaufbereich des Schlammes gelangt, wobei einem Schlamm ein Flockungsmittel beigemischt wird, wonach der Schlamm zumindest teilweise entwässert wird, wobei das Fließverhalten des Schlamms am Sieb optisch erfasst und die Menge des zuzumischenden Flockungsmittels abhängig von der freien Sieboberfläche in einem Kontrollbereich eingestellt wird. Sie betrifft auch eine Vorrichtung zur Entwässerung von Schlamm, mit einer Flockungsmittelzuführeinrichtung und ein der Flockungsmittelzuführeinrichtung nachgelagertes Sieb, das durch Waschdüsen gereinigt wird, bevor es in den Einlaufbereich gelangt, wobei eine Einrichtung, insbesondere Kamera, zur optischen Erfassung des Fließverhaltens des Schlamms vorgesehen ist und über ein Kontrollsystem mit der Flockungsmittelzuführeinrichtung zur Regelung der Flockungsmittelmenge verbunden ist.

Aus dem Stand der Technik sind Verfahren zur Entwässerung von Schlämmen bekannt geworden, wobei Schlämme wie ein Klärschlamm oder ein Faserschlamm unter Beimengung eines Flockungsmittels entwässert werden. Dabei wird in einem ersten Schritt das Flockungsmittel dem Schlamm beigemengt, um im Schlamm eine Flockung auszulösen, wonach der Schlamm auf ein Sieb aufgebracht wird, beispielsweise auf einem Seihtisch, sodass im Schlamm befindliche Flüssigkeit durch das Sieb abrinnt, während trockene Flocken des Schlammes am Sieb verbleiben. Dadurch wird der Schlamm getrocknet bzw. entwässert. Bei derartigen Verfahren ist eine Dosierung des Flockungsmittels ein wichtiger Parameter. Einerseits kann nur bei einer richtigen Dosierung ein gewünschter Trockengehalt erreicht werden, da sowohl eine Überflockung als auch eine Unterflockung eine Effizienz der Entwässerung bzw. eines Siebvorganges negativ beeinträchtigen. Andererseits verursacht das Flockungsmittel selbst Kosten, sodass eine übermäßige Beimengung des Flockungsmittels zusätzlich zu einer Verteuerung des Verfahrens führt.

Üblicherweise wird eine dem Schlamm beigemengte Flockungsmittelmenge manuell durch ein Bedienpersonal eingestellt, welches einen Flockungszustand des Schlammes visuell erfasst. Dabei bestehen jedoch an das Bedienpersonal hohe Anforderungen sowohl in Bezug auf eine Beurteilungsfähigkeit eines richtigen Flockungszustandes als auch in Bezug auf Ausdauer und Wachsamkeit. So ist für ein Bedienpersonal meist nicht erkennbar, ob die Entwässerungsleistung durch ein Erhöhen oder ein Reduzieren der Flockungsmittelmenge verbessert werden kann, weil sowohl eine Überdosierung als auch eine Unterdosierung von Flockungsmittel zu einer schlechten Entwässerungsleistung führt. Im Ergebnis ist eine richtige Dosierung des Flockungsmittels bei Verfahren des Standes der Technik nur schwer zu erreichen, wodurch die Verfahren zumeist nicht in einem optimalen Betriebspunkt betrieben werden, sodass nur eine geringe Entwässerungsleistung oder ein hoher Flockungsmittelverbrauch erreicht wird.

Es sind auch automatisierte Verfahren z.B. nach der US 5 380 440 bekannt, bei der ein Bildsignal von der Oberfläche einer feuchten Feststoffschicht auf einem Band aufgenommen und mit einem vorgegebenen Wert für einen Feuchtigkeitsgehalt verglichen wird. Hier kann zwar der optimale Flockungsmittelverbrauch für die Entwässerung zu einem am einer bestimmten Stelle des Bandes vorhandenen Feuchtigkeitswertes erzielt werden, jedoch nicht die optimale bzw. minimale Feuchte erreicht werden. Weiters ist aus der US 2007/0090060 ein System bekannt, bei dem ein Kontrollbereich betrachtet wird, der sich nach den Entwässerungspflügen zur Verbesserung der Entwässerung angeordnet ist. Durch die Verschmutzung des Bandes und das ungleichmäßige Strömungsverhalten der einzelnen Schlämme ist hier primär eine hohe Zugabe von Flockungsmittel erforderlich, um die gewünschten Steifen als Basis für die Messung zu sehen. So ist die Messung stark verfälscht und ungenau und kann nicht zu einer minimalen Zugabemenge an Flockungsmittel führen. Aufgabe der Erfindung ist es daher, ein Verfahren der eingangs genannten Art anzugeben, bei welchem eine richtige Flockungsmittelmenge gewährleistet wird, sodass eine optimale Entwässerungsleistung erzielt wird, die auch reproduzierbar ist.

Die Erfindung ist daher dadurch gekennzeichnet, dass der Kontrollbereich an einer Stelle des gereinigten Siebes im Einlaufbereich des Schlammes, beispielsweise am Rand, eingerichtet wird.

Durch die Messung der freien Sieboberfläche ist ein objektiver Wert des Fließverhaltens des Schlammes gegeben, welcher zur Einstellung bzw. Änderung der Flockungsmittelmenge eingesetzt wird. Eine fehleranfällige Beurteilung des Flockungszustandes durch das Bedienpersonal ist somit nicht mehr zwingend erforderlich, um die Flockungsmittelmenge anzupassen, sodass aufgrund der richtigen Flockungsmittelmenge im Verfahren eine optimale Entwässerungsleistung bei wirtschaftlichem Betrieb erzielt wird. Die Entwässerungsleistung gibt die Flüssigkeitsmenge an, welche dem Schlamm pro Zeiteinheit im Verfahren entnommen wird. Weiter kann das erfindungsgemäße Verfahren auch automatisiert durchgeführt werden, weil mit der gemessenen Änderung der freien Sieboberfläche eine objektiv messbare Regelgröße vorliegt, welche in eine Regelung einer Flockungsmittelzuführeinrichtung einfließen kann. Die Zunahme der freien Siebfläche weist auf eine zu hohe Flockungsmittelzugabe hin, die automatisch reduziert werden kann. Die optimale Menge an Flockungsmittel ist erreicht, wenn ein vorgegebener Wert der freien Sieboberfläche erreicht ist, d.h. wenn das Fließverhalten des Schlammes derart ist, dass kein Überfluten des Siebes erfolgt und daher die Entwässerungsvorrichtung ohne Probleme betrieben werden kann. Da im Einlaufbereich das Sieb gereinigt vorliegt, kann dadurch eine sichere Bestimmung der freien Sieboberfläche ohne Einfluss des zu entwässernden Schlammes erfolgen, da die freie Sieboberfläche immer dieselben (Farb-) Werte aufweist. Eine vorteilhafte Weiterbildung der Erfindung ist dadurch gekennzeichnet, dass der Schlamm ein Kommunalschlamm, mineralischer Schlamm oder Faserschlamm ist. Speziell bei diesen Schlämmen wird zur Entwässerung ein Flockungsmittel eingesetzt, dessen Menge so optimiert werden kann.

Wird der Kontrollbereich nach insbesondere verschiebbaren Barrieren im Einlaufbereich eingerichtet so kann damit abhängig vom Schlamm und der Ausführung des Einlaufbereiches immer ein Kontrollbereich mit gereinigter freier Sieboberfläche erzeugt werden, in dem sich bei entsprechender Änderung der Flockungsmittelmenge das Fließverhalten des Schlammes und damit der Anteil der freien Sieboberfläche signifikant ändert, was zu einer stabilen Regelung führt.

Eine günstige Weiterbildung der Erfindung ist dadurch gekennzeichnet, dass eine Kamera, insbesondere eine Digitalkamera, kontinuierlich den Kontrollbereich erfasst und die freie Siebfläche, d.h. nicht von Schlamm bedeckter Oberfläche durch eine Pixelauswertung unter Einsatz eines Farbkriteriums erfasst wird. Dadurch kann besonders günstig zwischen Bereichen mit bzw. ohne Schlamm unterschieden werden.

Eine günstige Ausgestaltung der Erfindung ist dadurch gekennzeichnet, dass die zugemischte Flockungsmittelmenge so eingestellt wird, dass der Anteil der freien Sieboberfläche im Kontrollbereich konstant gehalten wird. Damit wird immer ein optimaler Betriebspunkt eingestellt, so dass die Maschine ohne Probleme z.B. durch Überflutung bei zu wenig Flockungsmittel, betrieben werden kann.

Eine günstige Weiterbildung der Erfindung ist dadurch gekennzeichnet, dass der Ausgangswert für die Regelung der Flockungsmittelmenge durch eine Änderung der Flockungsmittelmenge in großen Schritten verändert wird und bei Verschlechterung, d.h. Verringerung der freien Siebfläche, die Flockungsmittelmenge in kleineren Schritten in die entgegen gesetzte Richtung geändert wird. Damit kann schnell ein optimaler Betriebspunkt erreicht werden, selbst wenn der Startpunkt bei einer wesentlichen Überdosierung des Flockungsmittels liegt. In diesem Fall würde sich bei Erhöhung der Flockungsmittelmenge wieder eine Verschlechterung des Entwässerungsverhaltens einstellen und somit eine Umkehr der Flockungsmittelzugabe, d.h. Reduzierung der Menge, erfolgen.

Die Erfindung betrifft auch eine Vorrichtung zur Entwässerung von Schlamm, mit einer Flockungsmittelzuführeinrichtung und ein der Flockungsmittelzuführeinrichtung nachgelagertes Sieb, wobei eine Einrichtung, insbesondere Kamera, zur optischen Erfassung des Fließverhaltens des Schlamms vorgesehen ist und über ein Kontrollsystem mit der Flockungsmittelzuführeinrichtung zur Regelung der Flockungsmittelmenge verbunden ist.

Sie ist erfindungsgemäß dadurch gekennzeichnet, dass die Einrichtung, insbesondere Kamera so eingerichtet ist, dass sie einen Kontrollbereich im Einlaufbereich des gereinigten Siebes erfasst. Durch den Einsatz einer Kamera, insbesondere Digitalkamera, kann sehr einfach ein Kontrollbereich erfasst und das Messergebnis über eine Kontrollroutine zur Regelung der Flockungsmittelmenge eingesetzt werden.

Wird die Einrichtung, insbesondere Kamera, oberhalb des Siebes verschiebbar angeordnet, so kann abhängig von der Konstruktion des Einlaufes sowie den Schlammeigenschaften immer ein optimaler Kontrollbereich eingestellt sowie bei größeren Änderungen auch wieder angepasst werden.

Eine günstige Weiterbildung der Erfindung ist dadurch gekennzeichnet, dass die Einrichtung, insbesondere Kamera so eingerichtet ist, dass sie einen Kontrollbereich im Einlaufbereich erfasst. Da im Einlaufbereich das Sieb noch gereinigt vorliegt, kann hier eine besonders sichere Erfassung und damit stabile Regelung erreicht werden.

Eine vorteilhafte Ausgestaltung der Erfindung ist dadurch gekennzeichnet, dass im Einlaufbereich Barrieren vorgesehen sind, wobei die Barrieren verschiebbar ausgestaltet sein können. Dabei wird der Kontrollbereich nach den insbesondere verschiebbaren Barrieren im Einlaufbereich so eingerichtet, dass damit abhängig vom Schlamm und der Ausführung des Einlaufbereiches immer ein Kontrollbereich mit freier Sieboberfläche erzeugt werden kann, in dem sich bei entsprechender Änderung der Flockungsmittelmenge das Fließverhalten des Schlammes und damit der Anteil der freien Sieboberfläche signifikant ändert, was zu einer stabilen Regelung führt

Eine vorteilhafte Weiterbildung der Erfindung ist dadurch gekennzeichnet, dass in der Mitte des Siebes in Querrichtung gesehen ein insbesondere verstellbarer Schieber vorgesehen ist, der beispielsweise an einer in der Mitte des Siebes angeordneten Barriere befestigt sein kann. Damit kann eine symmetrische Verteilung des Schlammes im Einlaufbereich erreicht werden und somit auch eine symmetrische Verteilung freier Sieb flächen am linken und rechten Rand des Siebes, welche als Kontrollflächen konfiguriert wurden. Grundsätzlich kann es auch mehrere Kontrollflächen geben, deren Summenfläche zur Regelung herangezogen wird. Das kann speziell bei unsymmetrischer Schlammverteilung von Vorteil sein. Durch einen verstellbaren Schieber kann auch bei laufendem Betrieb gegebenenfalls automatisch eine symmetrische Verteilung eingestellt werden.

Die Erfindung wird nun anhand der beigefügten Zeichnungen beispielhaft beschrieben, wobei
Fig. 1 eine Anlage nach der Erfindung,
Fig. 2 eine Draufsicht auf eine erfindungsgemäße Anlage und
Fig. 3 eine Draufsicht auf eine erfindungsgemäße Anlage nach Fig. 2 jedoch mit geändertem Einlaufbereich und Kontrollbereich
darstellt.

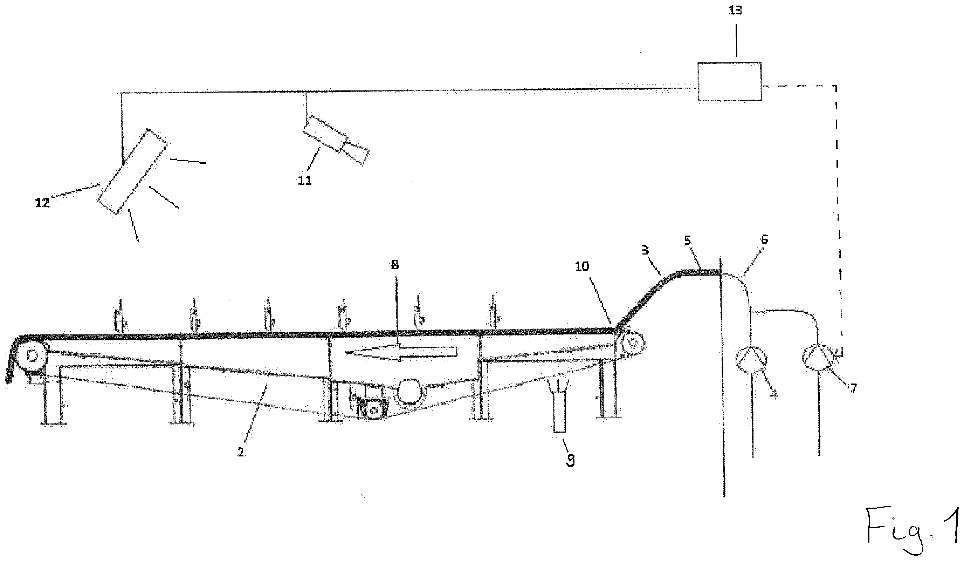

Fig. 1 zeigt eine erfindungsgemäße Entwässerungsanlage 1, die hier als einfacher Seihtisch mit einem Sieb 2 dargestellt ist. Für größere Wassermengen kann auch eine zusätzliche Wanne und Ablauf angeordnet sein, wobei das Sieb 2 gegebenenfalls um eine zusätzliche Walze geführt sein kann. Die Erfindung kann z.B. auch bei Seihzonen von Doppelbandpressen eingesetzt werden. Der Schlamm 3 wird hier mittels einer Schlammpumpe 4 einem Stoffauflauf 5, der hier als Schütte ausgebildet ist, zugeführt. In die Schlammzuführleitung 6 wird durch eine Flockungsmittelpumpe 7 die erforderliche Menge an Flockungsmittel zudosiert. Das in Richtung 8 laufende Sieb 2 wird durch Waschdüsen 9 gereinigt, bevor es in den Einlaufbereich 10 gelangt. Der Schlamm 3 wird dann auf das gereinigte Sieb 2 aufgegeben. Durch eine Kamera 11 wird im Einlaufbereich 10 ein Kontrollbereich erfasst. Zur besseren Erkennung ist noch eine Beleuchtung 12 vorgesehen. Die Kamera 11 ist über ein Kontrollsystem 13 mit der Flockungsmittelpumpe 7 verbunden, so dass durch die Signale der Kamera 11 eine Regelung der Flockungsmittelmenge erfolgen kann.

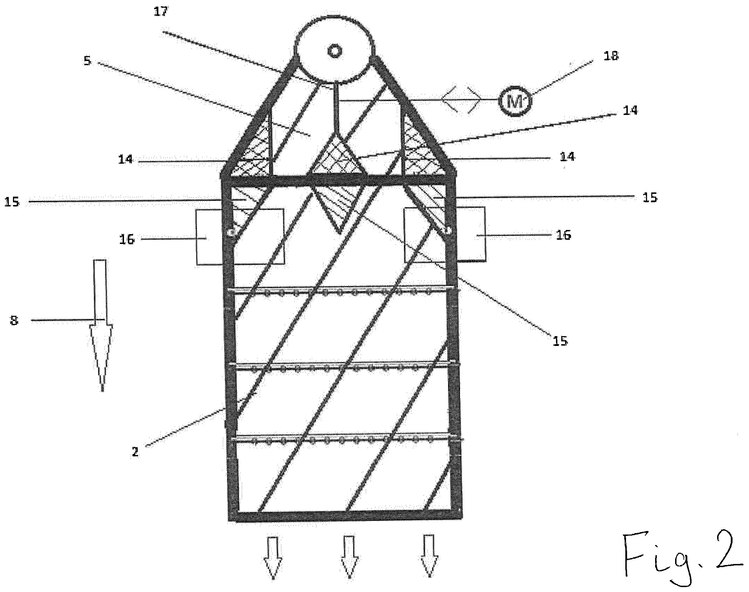

In Fig. 2 ist eine Draufsicht auf eine erfindungsgemäße Anlage dargestellt. Man sieht hier auf das Sieb 2, das im Wesentlichen mit Schlamm 3 bedeckt ist. Man sieht hier schematisch eine Schlammpumpe 4 und den Stoffauflauf 5, der als offene, geneigte Schütte aber auch geschlossen ausgebildet sein kann. Der Schlamm 3 wird durch den Stoffauflauf über die Breite des Siebes verteilt. Hier sind auch Barrieren 14 erkennbar, durch die, je nach Schlammart und Stoffauflaufkonstruktion, ihn Bahnlaufrichtung 8 anschließend freie Siebflächen 15 gebildet werden. Die Barrieren 14 können in einfachster Form durch entsprechend geformte Bleche gebildet werden. Die freien Siebflächen 15 sind noch durch die Waschdüsen (hier nicht dargestellt) gereinigt und bieten somit eine gute und gleichmäßige Basis für die Erkennung und Messung der freien Siebfläche. In diesem Beispiel würde der Kontrollbereich 16 einen Teil der freien Siebfläche 15 und einen weiteren mit Schlamm bedeckten Teil umfassen. In diesem Kontrollbereich 16 wird eine farbliche Unterscheidung zwischen Schlamm und der schlammfreien Oberfläche des Siebes erfasst, indem jeweils ein Farbraum einer der beiden Kriterien zugeordnet wird. Anschließend werden anhand des Farbkriteriums die einzelnen Pixel gezählt und daraus die Fläche des Schlammes und der schlammfreien Sieboberfläche ermittelt. Vorteil des im Einlaufbereich 10 angeordneten Kontrollbereichs 16 ist eine dauerhafte stabile und robuste Betrachtung. Weiters kann in einfacher Weise unsymmetrische Verteilung des Schlammes erkannt werden. Das kann durch die Verwendung von zwei getrennten und symmetrisch angeordneten Kontrollzonen 16 (wie dargestellt) besonders gut erkannt werden. Die Einstellung der symmetrischen Schlammzufuhr kann durch einen Schieber 17 erfolgen, wobei über ein Stellorgan 18 die Verteilung durch eine automatische Regelung korrigiert werden kann.

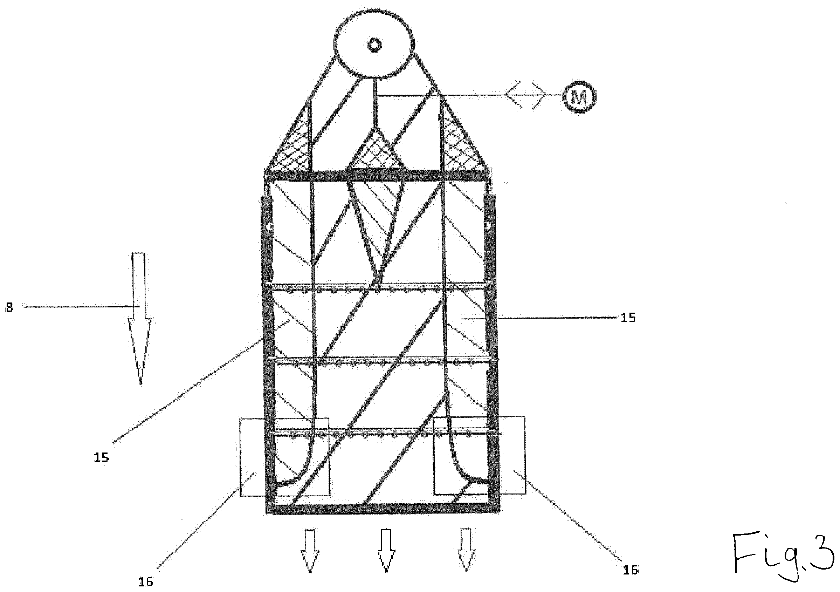

Fig. 3 zeigt eine analoge erfindungsgemäße Anordnung wie Fig.2, jedoch mit einem geänderten Einlaufbereich 10' und in Bahnlaufrichtung 8 versetzt angeordneten Kontrollbereichen 16'. Dieser Fall kann insbesondere bei dünneren Klärschlämmen auftreten, die mit höherer Geschwindigkeit zugeführt werden. Hier bleibt die freie und gereinigte Siebfläche 15' länger erhalten und der Schlamm 3 fließt erst später in die Randbereiche. Auch hier kann in diesen Kontrollbereichen 16' eine eindeutige Abhängigkeit zwischen freier Siebfläche 15' und mit Schlamm bedeckter Fläche erkannt werden und daraus eine Regelgröße für die Flockungsmittelmenge abgeleitet werden. Auch hier kann die Gefahr einer Überflutung des Siebes wegen zu flüssigem Schlamm frühzeitig erkannt und durch Erhöhung der Flockungsmittelmenge verhindert werden. Damit kann auch in diesen Fällen eine optimale Regelung bei minimalem Einsatz von Flockungsmittel erreicht werden.

Die Erfindung ist nicht auf die dargestellten Beispiele beschränkt, sondern kann neben einer Anordnung bei Seihtischen auch z.B. bei Seihzonen von Doppelsiebanlagen eingesetzt werden. Neben Kommunal- bzw. Klärschlamm kann diese Anwendung auch bei mineralischen Schlämmen oder Faserschlämmen eingesetzt werden. Auch wenn hier andere Bedingungen speziell bei der Fließfähigkeit der Schlämme und bedingt durch die eingesetzten Flockungsmittel bestehen, kann immer ein geeigneter Kontrollbereich gefunden werden, in dem bei geringem Flockungsmittelverbrauch ein Fließen des Schlammes in den Randbereich auf die noch gereinigte freie Siebfläche erfolgt. Eine Änderung des Ortes des Kontrollbereiches ist auch bei anders ausgeführten Stoffaufläufen möglich und oft erforderlich. Ein einmal als optimal erkannter Kontrollbereich und damit auch die Anordnung der Kamera bzw. der Beleuchtung muss aber nicht mehr verändert werden. So ist eine Einstellung leicht im Rahmen der Inbetriebnahme möglich und im weiteren Betrieb nicht mehr erforderlich.

## Patentansprüche

1. Verfahren zur Entwässerung von Schlamm auf einem Sieb, das durch Waschdüsen gereinigt wird und anschließend in den Einlaufbereich des Schlammes gelangt, wobei einem Schlamm ein Flockungsmittel beigemischt wird, wonach der Schlamm zumindest teilweise entwässert wird, wobei das Fließverhalten des Schlamms am Sieb optisch erfasst und die Menge des zuzumischenden Flockungsmittels abhängig von der freien Sieboberfläche in einem Kontrollbereich eingestellt wird, **dadurch gekennzeichnet, dass** der Kontrollbereich an einer Stelle des gereinigten Siebes im Einlaufbereich des Schlammes, beispielsweise am Rand, eingerichtet wird.

2. Verfahren nach Anspruch 1, **dadurch gekennzeichnet, dass** der Schlamm ein Kommunalschlamm, mineralischer Schlamm oder Faserschlamm ist.

3. Verfahren nach Anspruch 1 oder 2, **dadurch gekennzeichnet, dass** der Kontrollbereich nach insbesondere verschiebbaren Barrieren im Einlaufbereich eingerichtet wird.

4. Verfahren nach Anspruch 1 oder 2, **dadurch gekennzeichnet, dass** der Kontrollbereich nach einer Einschnürung des Stoffauflaufs im Einlaufbereich des Schlammes eingerichtet wird.

5. Verfahren nach einem der Ansprüche 1 bis 4, **dadurch gekennzeichnet, dass** eine Kamera, insbesondere eine Digitalkamera, kontinuierlich den Kontrollbereich erfasst und die freie Siebfläche, d.h. nicht von Schlamm bedeckter Oberfläche durch eine Pixelauswertung unter Einsatz eines Farbkriteriums erfasst wird.

6. Verfahren nach einem der Ansprüche 1 bis 5, **dadurch gekennzeichnet, dass** die zugemischte Flockungsmittelmenge so eingestellt wird, dass der Anteil der freien Sieboberfläche im Kontrollbereich konstant gehalten wird.

7. Verfahren nach einem der Ansprüche 1 bis 6, **dadurch gekennzeichnet, dass** der Ausgangswert für die Regelung der Flockungsmittelmenge durch eine Änderung der Flockungsmittelmenge in großen Schritten verändert wird und bei Verschlechterung, d.h. Verringerung der freien Siebfläche, die Flockungsmittelmenge in kleineren Schritten in die entgegen gesetzte Richtung geändert wird.

8. Vorrichtung zur Entwässerung von Schlamm, mit Waschdüsen (9), mit einer Flockungsmittelzuführeinrichtung und ein der Flockungsmittelzuführeinrichtung nachgelagertes Sieb, das durch die Waschdüsen (9) gereinigt wird, bevor es in den Einlaufbereich (10) gelangt, wobei eine Einrichtung (11), insbesondere Kamera, zur optischen Erfassung des Fließverhaltens des Schlamms vorgesehen ist und über ein Kontrollsystem (13) mit der Flockungsmittelzuführeinrichtung (7) zur Regelung der Flockungsmittelmenge verbunden ist, **dadurch gekennzeichnet, dass** die Einrichtung (11), insbesondere Kamera so eingerichtet ist, dass sie einen Kontrollbereich im Einlaufbereich (10) des gereinigten Siebes erfasst.

9. Vorrichtung nach Anspruch 8, **dadurch gekennzeichnet, dass** der Stoffauflauf eine Einschnürung im Einlaufbereich aufweist.

10. Vorrichtung nach Anspruch 8 oder 9, **dadurch gekennzeichnet, dass** die Einrichtung (11), insbesondere Kamera, oberhalb des Siebes verschiebbar angeordnet ist.

11. Vorrichtung nach einem der Ansprüche 8 bis 10, **dadurch gekennzeichnet, dass** die Einrichtung (11), insbesondere Kamera, als Farbkamera ausgestaltet ist.

12. Vorrichtung nach einem der Ansprüche 8 bis 11, **dadurch gekennzeichnet, dass** im Einlaufbereich (10) Barrieren (14) vorgesehen sind.

13. Vorrichtung nach Anspruch 12, **dadurch gekennzeichnet, dass** die Barrieren (14), insbesondere in Maschinenlaufrichtung verschiebbar ausgestaltet sind.

14. Vorrichtung nach Anspruch 12 oder 13, **dadurch gekennzeichnet, dass** in der Mitte des Siebes (2) in Querrichtung gesehen ein insbesondere verstellbarer Schieber (17) vorgesehen ist, der beispielsweise an einer in der Mitte des Siebes (2) angeordneten Barriere (14) befestigt sein kann.

## Claims

1. Method for dewatering sludge on a wire, which is cleaned by washing nozzles and subsequently enters the sludge inflow area, whereby a flocculant is added to a sludge and the sludge is then at least partially dewatered, during which the flow characteristics of the sludge on the wire are scanned optically and the amount of flocculant to be added is set according to the free surface area of the wire in a control zone, **characterized in that** the control zone is established at a point on the cleaned wire in the sludge inflow area, for example at the edge.

2. Method according to Claim 1, **characterized in that** the sludge is a municipal, mineral, or fibrous sludge.

3. Method according to Claim 1 or 2, **characterized in that** the control zone is set up after barriers, especially movable barriers, in the inflow area.

4. Method according to Claim 1 or 2, **characterized in that** the control zone is set up after a reduced cross-section in the headbox in the sludge inflow area.

5. Method according to one of Claims 1 to 4, **characterized in that** a camera, especially a digital camera, scans the control zone continuously and the free surface of the wire, i.e. the surface area not covered with sludge, is measured by means of a pixel analysis, applying a color criterion.

6. Method according to one of Claims 1 to 5, **characterized in that** the flocculant dosage added is set such that the proportion of free wire surface area is maintained constant in the control zone.

7. Method according to one of Claims 1 to 6, **characterized in that** the initial value for controlling the flocculant dosage is changed by altering the flocculant dosage in large steps, and if there is a deterioration, i.e. a reduced free surface area, it is altered in smaller steps in the opposite direction.

8. Device for dewatering sludge, with washing nozzles (9), with a flocculant feed device, and a wire arranged after the flocculant feed device, which is cleaned by the washing nozzles (9) and subsequently enters the inflow area (10), where a device (11), especially a camera, is provided in order to scan the flow characteristics of the sludge optically and is connected via a control system (13) to the flocculant feed device (7) in order to control the flocculant dosage added, **characterized in that** the device (11), especially a camera, is set up so as to scan a control zone in the inflow area (10) of the cleaned wire.

9. Device according to Claim 8, **characterized in that** the headbox has a reduced cross-section in the inflow area.

10. Device according to Claim 8 or 9, **characterized in that** the device (11), especially a camera, is arranged movably above the wire.

11. Device according to one of Claims 8 to 10, **characterized in that** the device, especially a camera, is designed as a color camera.

12. Device according to one of Claims 8 to 11, **characterized in that** barriers (14) are provided in the inflow area (10).

13. Device according to Claim 12, **characterized in that** the barriers (14) are designed so as to be movable, especially in machine direction.

14. Device according to Claim 12 or 13, **characterized in that** a slide (17), especially an adjustable slide, is provided in the center of the wire (2) when viewed in cross-machine direction and **in that** this slide (17) can be secured, for example, to a barrier (14) arranged in the center of the wire (2).

## Revendications

1. Procédé de déshydratation de boue sur un tamis, qui est nettoyé par des buses de lavage et ensuite parvient dans la zone d'entrée de la boue, un agent de floculation étant mélangé à la boue, la boue étant ensuite au moins partiellement déshydratée, le comportement d'écoulement de la boue étant détecté optiquement sur le tamis et la quantité de l'agent de floculation à mélanger étant réglée en fonction de la surface libre du tamis dans une zone de contrôle, **caractérisé en ce que** la zone de contrôle est conçue dans une position du tamis nettoyé dans la zone d'entrée de la boue, par exemple sur le bord.

2. Procédé selon la revendication 1, **caractérisé en ce que** la boue est une boue urbaine, une boue minérale ou une boue de fibre.

3. Procédé selon la revendication 1 ou 2, **caractérisé en ce que** la zone de contrôle est agencée après des barrières notamment mobiles dans la zone d'entrée.

4. Procédé selon la revendication 1 ou 2, **caractérisé en ce que** la zone de contrôle est agencée après un rétrécissement de la cuve d'alimentation dans la zone d'entrée de la boue.

5. Procédé selon l'une quelconque des revendications 1 à 4, **caractérisé en ce qu'**une caméra, notamment une caméra numérique, détecte en continu la zone de contrôle et détecte la surface de tamis libre, autrement dit la surface qui n'est pas recouverte de boue, au moyen d'une évaluation de pixel selon un critère de couleur.

6. Procédé selon l'une quelconque des revendications 1 à 5, **caractérisé en ce que** la quantité d'agent de floculation mélangée est réglée de manière que la proportion de la surface de tamis libre est maintenue constante dans la zone de contrôle.

7. Procédé selon l'une quelconque des revendications 1 à 6, **caractérisé en ce que** la valeur de sortie pour le réglage de la quantité d'agent de floculation est modifiée par une modification de la quantité d'agent de floculation sur de grands pas de progression et en cas de détérioration, autrement dit, de réduction de la surface de tamis libre, la quantité de floculation est modifiée sur de petits pas de progression dans la direction opposée.

8. Dispositiv de déshydratation de boue, au moyen de buses de lavage (9), d'un dispositif d'alimentation en agent de floculation et un tamis en aval du dispositif d'alimentation en agent de floculation, qui est nettoyé par les buses de lavage (9) avant qu'il ne parvienne dans la zone d'entrée (10), un dispositif (11), notamment une caméra, de détection optique du comportement d'écoulement de la boue étant relié par l'intermédiaire d'un système de contrôle (13) au dispositif d'alimentation en agent de floculation (7) pour régler la quantité d'agent de floculation, **caractérisé en ce que** le dispositif (11), notamment la caméra, est agencé de manière qu'il détecte une zone de contrôle dans la zone d'entrée (10) du tamis nettoyé.

9. Dispositif selon la revendication 8, **caractérisé en ce que** la cuve d'alimentation présente un rétrécissement dans la zone d'entrée.

10. Dispositif selon la revendication 8 ou 9, **caractérisé en ce que** le dispositif (11), notamment la caméra, est disposé mobile au-dessus du tamis.

11. Dispositif selon l'une quelconque des revendications 8 à 10, **caractérisé en ce que** le dispositif (11), notamment la caméra, est conçu sous la forme d'une caméra couleur.

12. Dispositif selon l'une quelconque des revendications 8 à 11, **caractérisé en ce que** dans la zone d'entrée (10) sont disposées des barrières (14).

13. Dispositif selon la revendication 12, **caractérisé en ce que** les barrières (14) sont conçues mobiles notamment dans le sens de la marche de la machine.

14. Dispositif selon la revendication 12 ou 13, **caractérisé en ce qu'**au centre du tamis (2) dans le sens transversal est disposé un coulisseau (17) notamment réglable, qui par exemple peut être fixé sur une barrière (14) disposée au centre du tamis (2).
